# EUROPEAN PATENT APPLICATION

(11) **EP 1 137 310 A2**
(43) Date of publication of application: **26.09.2001**
(21) Application number: 01302266.0
(22) Date of filing: 12.03.2001
(51) Int. Cl.: H04Q 11/00

(54) **An apparatus and method of testing optical networks using router modules**

(30) Priority: 23.03.2000 US 532296
(71) Applicant: LUCENT TECHNOLOGIES INC., Murray Hill, New Jersey 07974-0636 (US)
(72) Inventor: Jennings, Mark R., Andover, New Jersey 07821 (US); Leone, Franks S., Berkeley Heights, New Jersey 07922 (US); Pimpinella, Richard J., Hampton, New Jersey 08827 (US)
(74) Representative: Watts, Christopher Malcolm Kelway, Dr.

(57) **Abstract**

A apparatus and method for testing portion of an optical fiber network from various remote stations without having to have optical testing equipment at those remote stations. The system and method utilize a series of routers that are located at the central office and the remote stations of an optical fiber network. The routers are interconnected through a common optical pathway that is part of the optical fiber network. Testing equipment is located at the central office of the optical fiber network. Optical testing signals and command signals are forwarded to the router at the central office. The router at the central office multiplexes the signals and forwards the signals as an optical transmission passing between the central office and a remote station. The router at the remote station removes the multiplexed signal from the optical transmission. Once removed, the optical test signals and command signals are utilized at the remote station to test at least a portion of the optical fiber network from that remote station.

## Description

The present invention relates to hand-held vegetation cutters, particularly hedge cutters, chainsaws and the like.

Hedge trimmers, cutters or shears are well known in the art. For compliance with European safety standards, they must have two handles and two handed switching. The two handles should be spaced well apart for good control of the machine. The point of balance is generally close to the front handle to enable the tool to be carried comfortably single-handedly.

A variety of front handle styles are known, from a simple T-handle to more complex loop handles which allow a multiplicity of hand positions for different working attitudes. The longer the front handle, the more complex it is to provide switching elements on those surfaces. Most hedge cutters have a single switch element in the front handle, which pivots and/or slides. When the switch element is pressed close to its pivot point, the operating force is unavoidably high.

Two handed switching essentially provides an interlock arrangement which can be achieved by electrical or mechanical means. Electrical interlocks typically make use of a relay circuit and most mechanical interlocks involve a differential lever system and some form of lost motion. Some mechanical arrangements involve sliding elements and springs.

One particular hedge cutter is described in our earlier applications, EP-0 750 836 and EP-0750 837 and is illustrated in Figures 1 to 4. This design will now be described in some detail, although further reference should be made to the full disclosures of the above documents. The cutter 10 has a housing 12 and twin superimposed cutter blades 18 extending outwardly from the housing. The housing, at the side facing away from the cutter blades 18 has a rear C-shaped handle 14 which together with the housing 12 forms a closed, oval engagement opening 19.

The handle 14 carries a first or rear switch 13 comprising a first actuating lever 15 on its lower side for turning on and off the drive of the hedge shears. The lever 15 is displaceable relative to the handle 14 transversely to its contour and is depressible in the handle and extendable from it, pivoting about a point 22 and being biased in the extended position by means of a compression spring.

The upper contour of the housing 12 extends from the C-shaped handle 14 forwardly and ends in a second or front handle 11. The second handle is composed of a bar-shaped, longitudinally extending T-post 16 which longitudinally and forwardly merges into a transverse section. Both ends of the transverse section bend downwardly at their sides. The transverse section and the housing 12 are spaced sufficiently to allow the hand of the operator in between.

The front handle 11 at its upper side has a second or front switch in the form of a T-shaped actuating lever 17 which follows the contour of the handle 11. The T-shaped actuating lever 17 pivots downwardly relative to the handle 11 about a generally central axis 24 located in the upper region of the housing 12 near the end of the T-post 16.

Only when both the first actuating lever 15 and the T-shaped actuating lever 17 are simultaneously depressed is the hedge cutter is ready for operation. When either one of the actuating levers 15, 17 is released, the operation of the hedge cutter stops immediately.

When the hand of an operator engages handle 16 at its side or at its end, T-shaped actuating lever 17 can be depressed with the thumb. This position is especially advantageous for vertical cutting of hedges. When the operator's hand engages the cutter from above the handle 16, the actuating lever 17 can be depressed with the hand, This position is especially advantageous for horizontal cutting.

The end of the first actuating lever 15 remote the pivoting point 22 is provided with a first toothed segment 26. Similarly, the second, T-shaped, actuating lever 17 is provided, at its free end, with a second toothed segment 27, The toothed surfaces of segments 26,27 generally oppose each other and a gear wheel 31 is supported therebetween. The gear wheel 31 is mounted for rotation upon a switch rod 35 which comprises a central rod portion with upper 34 and lower 37 perpendicular arms. The upper perpendicular arm 34 acts as an axle for the gear wheel 31. The lower perpendicular arm 37 acts as a hook and is positioned such that by upward movement it can contact the actuator 40 of a microswitch 41. The microswitch activates the motor and thus the cutter blades 18 in a conventional manner.

As an actuating lever, for example the first actuating lever 15, is operated, the first toothed segment 26 of the lever 15 is moved upwardly following an arc. This results in a small upward movement of the gear wheel 31 as it runs along the teeth of the toothed segment 27 of the second lever, but not enough to cause the lower perpendicular arm of the switch rod to contact the microswitch 41. When the second lever is operated as it moves upwardly it causes the gear wheel 31 to run along the toothed segment 26 of the first lever, causing the switch rod to rise further, namely to a point at which the lower perpendicular arm contacts and actuates the microswitch. Thus, it will be seen, the motor is only powered when both switch levers 15,17 are depressed.

As discussed above, a disadvantage of many hedge trimmer handle designs is that as the design of the front handle becomes more complex or simply larger, the more difficult it becomes to actuate the front switch The present invention seeks to develop the design described above and provide a means for enabling actuation of the front switch in a variety of hand positions.

In its broadest sense, the present invention provides a vegetation cutter comprising a housing, a cutter element extending in a longitudinal direction outwardly from the housing and including drive means for imparting motion to the cutter element, wherein the housing includes a front handle and a rear handle, each provided with a respective switch, wherein the drive means is actuated only when both switches are pressed simultaneously. The present invention is characterised in that the front handle switch is also actuatable from at least one auxiliary switch through a mechanical linkage between the front handle and auxiliary switches.

Preferably, the mechanical linkage includes a cord or cable.

Preferably, the switches act by pivoting about respective axes. Typically, the pivot axis of the front handle switch is generally perpendicular to that of at least one auxiliary switch.

Preferably, the cord or cable is anchored to the auxiliary switch at a point remote from the pivot point.

Preferably, the pivoting axes of the front and rear handle switches are parallel.

In a preferred embodiment, the front handle and associated switch are formed with cooperating T-post and T-switch lever components each having a longitudinal body and two transverse arms. Preferably, the switching levers are provided with respective arcuate toothed segments at opposed ends and a gear wheel is provided therebetween, which gear wheel carries one end of a switch rod, linear movement of which switch rod causes, when both switches are depressed, actuation of a motor switch, in turn causing actuation of the drive means. The present invention is particularly characterised in this embodiment in that the transverse arms of the T-post of the front handle each extend downwardly to rejoin the housing thereby forming two looped handles; and wherein each looped handle includes an auxiliary switch.

Preferably, the vegetation cutter is an hedge cutter, said cutter element comprising a pair of cutter blades and said drive means imparts a reciprocating motion to at least one of the blades.

Preferably, the drive means includes an electric motor.

The above and other aspects of the present invention will now be described in further detail, by way of example only, with reference to the accompanying drawings, in which:

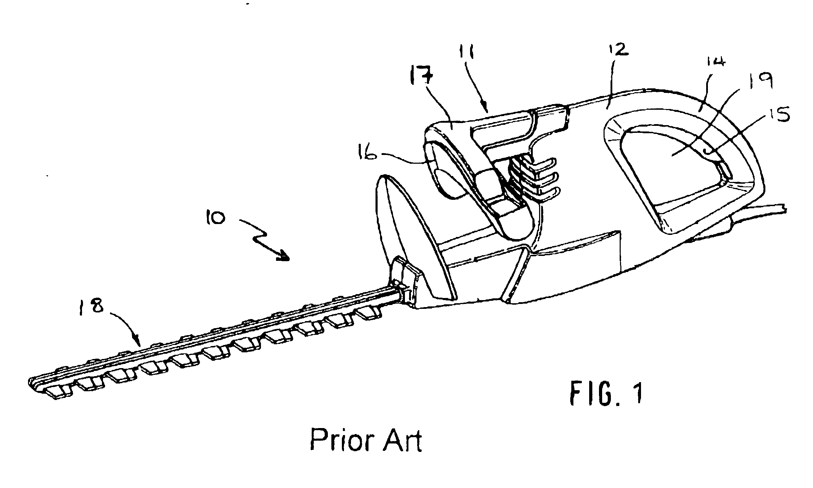

Figure 1 is a perspective view of a prior art hedge cutter;

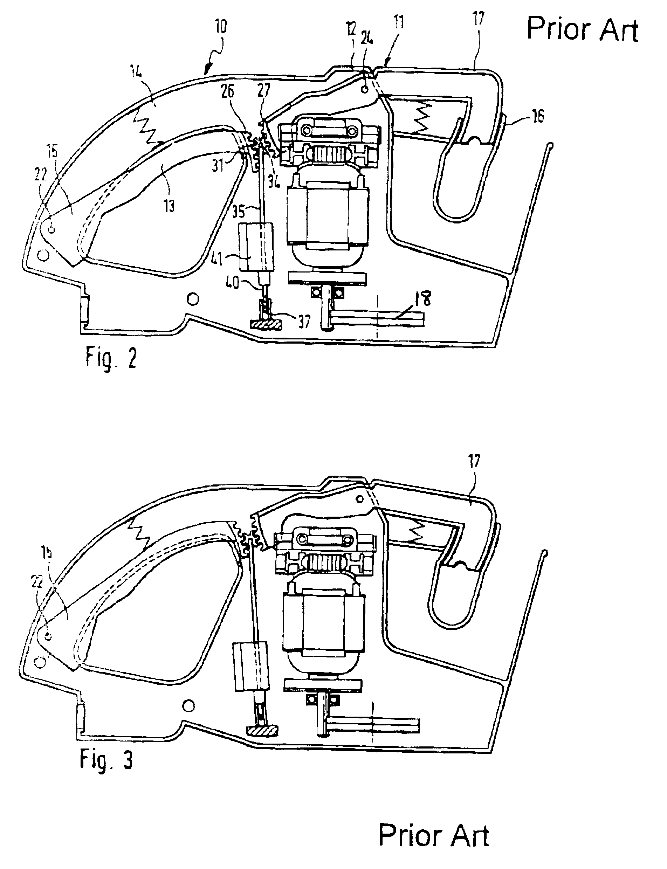

Figure 2 is a schematic cross-sectional view of the handle of the prior art cutter of Figure 1 with the switches in a rest position;
Figure 3 is a schematic cross-sectional view of the handle of the prior art cutter of Figure 1 with the switches in an actuated position;

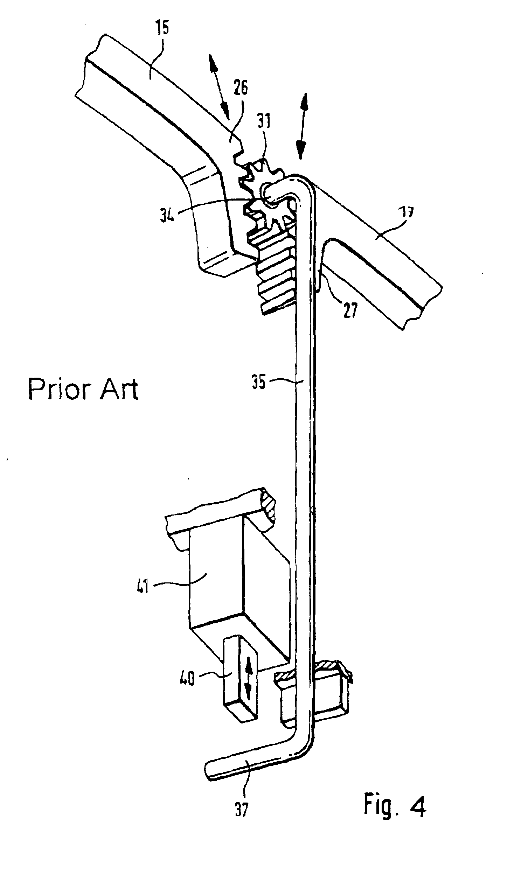

Figure 4 is a part perspective view of the principle components of the motor actuating mechanism of the prior art cutter of Figures 1 to 3;
Figure 5 is an exploded perspective view of the principle components of an embodiment of an hedge cutter in accordance with the present invention; and
Figure 6 is a longitudinal cross-sectional view of the embodiment of Figure 5.

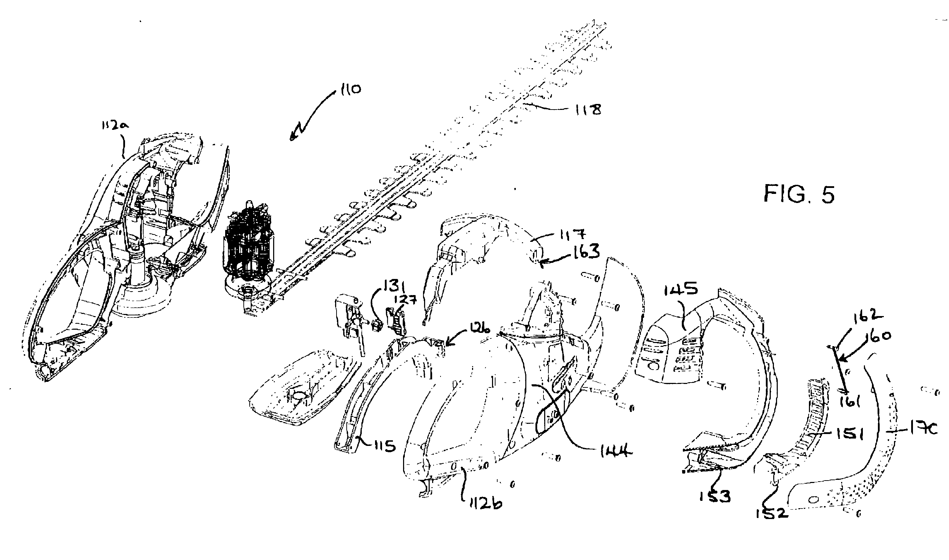

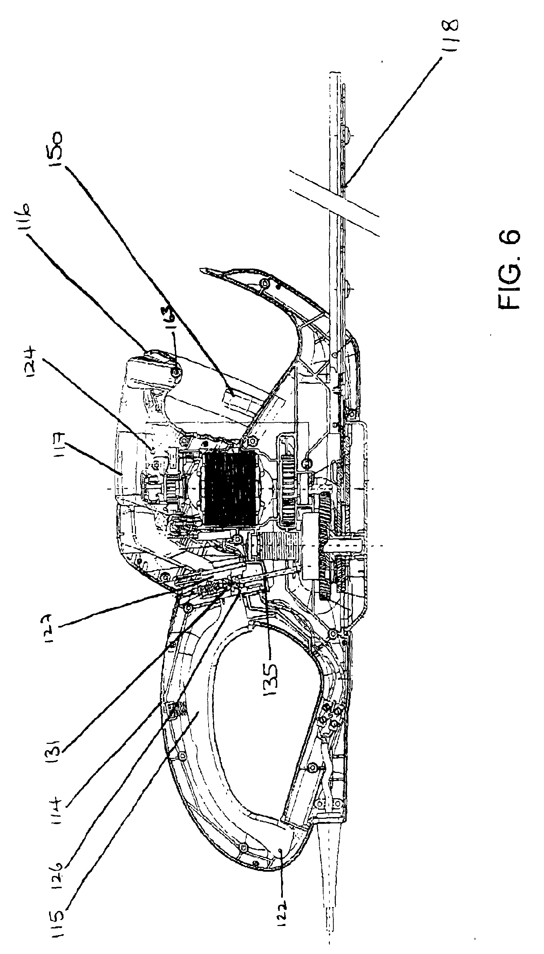

In Figures 5 and 6, the reference numerals 110 to 141 relate to substantially identical components as are found in the prior art hedge cutters described above with reference numerals one hundred lower. Except as follows, those features are not described in further detail.

With reference to the embodiment of Figures 5 and 6, there is shown an hedge cutter in design and operation substantially as described above. In this embodiment, however, the transverse section of the T-post of the front handle sweeps downwardly to rejoin the housing 112. In the embodiment shown, this is achieved by means of separate body 144 and handle elements 145, The housing 112 is in two parts, as is conventional with moulded components, parts 112a (shown assembled) and 112b (shown unassembled). An auxiliary switch 150 comprising an auxiliary switch lever 151 is mounted for pivotal movement within the handle element 145 by means of projections 152 formed at one end of the auxiliary switch lever 151 which engage corresponding cups 153 on the handle component. At the other end of the auxiliary switch lever 151 is anchored one end of a cord 160, held in place by a peg 161. The other end of the cord 160 is secured to the adjacent transverse arm of the T-switch, by means of a peg 162 engaging an aperture 163 formed in the transverse arm. A cover 170 holds the auxiliary switch lever 151 in place and a compression spring mounted between the cover 170 and the lever 151 biases the switch into a non-actuating position.

As auxiliary switch 150 is depressed, cord 160 pulls on T-switch 117 causing it to pivot about its pivot point 124, thereby, in combination with rear switch 115, resulting in actuation of the motor and thus the cutting blades.

The present invention provides a front handle arrangement for an hedge cutter, chainsaw and similar vegetation cutters which allows the user to easily hold the cutter in a variety of orientations, both with the cutter blades horizontal or vertical, but whilst still comfortably retaining control of the actuating switches. The curvature of the front handle retains the gripping positions close to the centre of gravity of the cutter.

## Claims

1. A vegetation cutter comprising a housing (112), a cutter element (118) extending in a longitudinal direction outwardly from the housing and including drive means for imparting a cutting motion to the cutter element (118); wherein the housing (112) includes a front handle (116) and a rear handle (114), each provided with a respective user-actuatable switch lever (117,115) and wherein the drive means is actuated only when both switch levers are actuated simultaneously, **characterised in that** the front handle switch lever (117) is also actuatable from at least one auxiliary switch lever (151) through a mechanical linkage.

2. A cutter as claimed in claim 1 wherein the mechanical linkage includes a cord or cable (160).

3. A vegetation cutter as claimed in claim 1 or claims 2 wherein the switch levers (117, 151) of the front handle act by pivoting about respective axes.

4. A vegetation cutter as claimed in claim 3 wherein the pivot axis (152) of the front handle switch lever (117) is generally perpendicular to that of at least one auxiliary switch lever (151).

5. A vegetation cutter as claimed in claim 4 wherein the cord or cable (160) is anchored to the auxiliary switch lever (151) at a point remote from the pivot point (152).

6. A vegetation cutter as claimed in any one of claims I to 5 wherein the pivoting axes of the front and rear handle switches are parallel.

7. A vegetation cutter as claimed in any preceding claim wherein the front handle (117) and associated switch lever (116) are respectively formed with cooperating T-post arid T-switch lever components each having a longitudinal body and two transverse arms.

8. A vegetation cutter as claimed in claim 7 wherein the front and rear switch levers are provided with respective arcuate toothed segments (26,27) at opposed ends and a gear wheel (34) is provided therebetween, which gear wheel (34) carries one end of a switch rod (35), linear movement of which switch rod (35) causes, when both switches are depressed, actuation of a motor switch (40,41), in turn causing actuation of the drive means.

9. A vegetation cutter as claimed in claim 7 or claim 8 wherein the transverse arms of the T-post of the front handle each extend downwardly to rejoin the housing thereby forming two looped handles; and wherein each looped handle includes an auxiliary switch.

10. A vegetation cutter as claimed in any preceding claim, in the form of a hedge cutter, said cutter element comprising a pair of cutter blades and said drive means imparts a reciprocating motion to at least one of the blades.
